# EUROPÄISCHE PATENTSCHRIFT

(11) **EP 4 025 460 B1**
(45) Veröffentlichungstag und Bekanntmachung des Hinweises auf die Patenterteilung: **06.05.2026**
(21) Anmeldenummer: 20767744.4
(22) Anmeldetag: 01.09.2020
(51) Int. Cl.: G08G 1/16, B60R 1/00, G06V 20/58, G01S 13/86, G01S 13/931, G01S 15/86, G01S 15/931, G01S 17/931, G01S 17/86

(54) **DARSTELLEN EINER FAHRZEUGUMGEBUNG ZUM BEWEGEN DES FAHRZEUGS ZU EINER ZIELPOSITION**
DISPLAY OF A VEHICLE ENVIRONMENT FOR MOVING THE VEHICLE TO A TARGET POSITION
AFFICHAGE D'UN ENVIRONNEMENT DE VÉHICULE POUR DÉPLACER LE VÉHICULE VERS UNE POSITION CIBLE

(30) Priorität: 05.09.2019 DE 102019123778
(43) Veröffentlichungstag der Anmeldung: 13.07.2022
(73) Patentinhaber: Valeo Schalter und Sensoren GmbH, 74321 Bietigheim-Bissingen (DE)
(72) Erfinder: EWALD, Stefan, 74321 Bietigheim-Bissingen (DE); PRINZHAUSEN, Stefanie, 74321 Bietigheim-Bissingen (DE)
(74) Vertreter: Jauregui Urbahn, Kristian
(86) Internationale Anmeldenummer: PCT/EP2020/074273
(87) Internationale Veröffentlichungsnummer: WO 2021/043732

(56) Entgegenhaltungen:
- EP-A2- 2 863 365
- EP-B1- 1 470 958
- DE-A1- 102007 017 038
- DE-A1- 102010 051 204
- DE-A1- 102011 082 483
- DE-A1- 102011 087 901
- DE-A1- 102014 204 872
- DE-A1- 102017 115 810
- US-A1- 2019 174 060

## Beschreibung

Die vorliegende Erfindung betrifft ein Verfahren zum Darstellen einer Umgebung eines Fahrzeugs, wobei das Fahrzeug ein kamerabasiertes Umgebungserfassungssystem aufweist zur Erfassung der Umgebung des Fahrzeugs, zum Bewegen des Fahrzeugs zu einer Zielposition in der Umgebung.

Auch betrifft die vorliegende Erfindung ein Fahrunterstützungssystem zum Darstellen einer Umgebung eines Fahrzeugs, mit einem kamerabasierten Umgebungserfassungssystem zur Erfassung der Umgebung des Fahrzeugs, und einer Verarbeitungseinheit, welche Bilder der Umgebung des Fahrzeugs empfängt, wobei das Fahrunterstützungssystem ausgeführt ist, das obige Verfahren durchzuführen.

Es sind verschiedenartige Assistenzfunktionen oder auch allgemein Fahrunterstützungssysteme zum Bewegen eines Fahrzeugs zu einer Zielposition bekannt. Dies betrifft beispielsweise das Parken von Fahrzeugen auf einem Parkplatz in der Umgebung, wobei der Parkplatz die Zielposition darstellt. So können entsprechende Assistenzsysteme beispielsweise eine Umgebung des Fahrzeugs erfassen, um bereits beim Erkennen von Parkplätzen oder anderen Zielpositionen zu helfen. Weiterhin können diese Systeme helfen, eine optimale Trajektorie zu bestimmen, der ein Fahrzeugführer folgen kann, um das Fahrzeug auf einem Parkplatz zu parken oder eine beliebige Zielposition zu erreichen.

Darüber hinaus sind beispielsweise autonomes oder teil-autonomes Parken wichtige Funktionen für aktuelle Fahrzeuge, die auch bereits in verschiedenen Fahrunterstützungssystemen Verwendung in diesen Fahrzeugen findet und das Parken erleichtert. Dabei wird das jeweilige Fahrzeug autonom oder teil-autonom auf einen erfassten Parkplatz manövriert. Dabei kann es dem Fahrzeugführer ermöglicht werden, dass Fahrzeug vor der Durchführung des Parkvorgangs bereits zu verlassen. Solche Funktionen sind beispielsweise bekannt, um das Fahrzeug nach dem Verlassen autonom in einer heimischen Garage zu parken oder auf einem beliebigen heimischen Stellplatz abzustellen.

Insbesondere in Ballungsräumen sind Parkplätze oftmals rar, und das Einparken wie auch das Ausparken kann sich zeitaufwändig gestalten. Daher sind weitere Verbesserungen beim Parken von Fahrzeugen wünschenswert.

Zur Bewegung des Fahrzeugs zu einer Zielposition ist es oftmals hilfreich, einem Führer eines Fahrzeugs Details zu der Bewegung des Fahrzeugs zu der Zielposition zu visualisieren. Dadurch kann das Vertrauen in das autonome bzw. teilautonome Bewegen des Fahrzeugs erhöht und damit die Akzeptanz dieser Funktionen signifikant verbessert werden. Zur Darstellung der Details zu der Bewegung des Fahrzeugs zu der Zielposition, insbesondere zu einem Parkplatz in der Umgebung des Fahrzeugs, wird ein üblicherweise in dem Fahrzeug befindliches User Interface des Fahrzeugs mit einem Bildschirm verwendet. Dabei ist es wichtig, dass der Fahrzeugführer die Darstellung der Details mit seiner eigenen Wahrnehmung der Umgebung des Fahrzeugs möglichst einfach abgleichen kann.

Zur Darstellung der Details zu der Bewegung des Fahrzeugs zu der Zielposition sind dabei verschiedene Konzepte bekannt. So kann beispielsweise eine Darstellung einer künstlich erzeugten Fahrzeugumgebung inkl. der Details zu der Bewegung des Fahrzeugs zu der Zielposition vorgenommen werden. Dazu wird typischerweise eine schematische Darstellung, die mit der realen Umgebung, wie sie von dem Fahrzeugführer wahrgenommen wird, nur wenige Übereinstimmungen aufweist, verwendet.

Auch sind prinzipiell Darstellungen mit einer 360°-Ansicht aus einer Vogelperspektive mit realen Kamerabildern bekannt. Diese Darstellungen basieren auf einem kamerabasierten Umgebungserfassungssystem, das eine 360°-Erfassung der Umgebung durchführt. Solche kamerabasierten Umgebungserfassungssysteme umfassen beispielsweise ein Surroundview-Kamerasystem mit vier Kameras, die an dem Fahrzeug angebracht sind. Dabei erfolgt aber eine Verzerrung der realen Umgebung des Fahrzeugs, was einen Abgleich mit der realen Umgebung erschwert. Prinzipiell sind auch vergleichbare Darstellungen nach der Art eines Bowl View (Schüsselansicht) oder eines adaptiven Bowl View bekannt, welche diese Probleme teilweise reduzieren. Insgesamt besteht noch Verbesserungsbedarf bei der Darstellung von relevanten Informationen zur Bewegung des Fahrzeugs zu der Zielposition.

Aus der DE 103 17 044 A1 ist bekannt, dass es bei schwierigen Fahrmanövern für Führer von Kraftfahrzeugen oft schwierig abzuschätzen, entlang welcher Bahn sich ihr Fahrzeug bewegen wird und welcher Freiraum zur Kollisionsvermeidung notwendig ist. Dies ist insbesondere dann der Fall, wenn der Fahrzeugführer mit den Abmaßen des Fahrzeugs oder dessen Fahrverhalten nicht vertraut ist. Bei einem Verfahren zur Überwachung des Freiraums in Fahrtrichtung eines Fahrzeugs werden mittels eines Kamerasystems Bilddaten des im Bereich der Fahrtrichtung befindlichen Fahrzeugumfeldes aufgenommen. Zusätzlich wird auf Basis der Betriebsparameter und der Abmessungen des Fahrzeugs innerhalb einer Signalverarbeitungseinheit der für eine ungehinderte Fahrt benötigte Freiraum vorausberechnet. Dem Führer des Kraftfahrzeugs werden dabei zumindest Teile der durch das Kamerasystem erfassten Bilddaten des benötigten Freiraums auf einer Anzeige angezeigt. Die dem benötigten Freiraum zugeordneten Bilddaten werden einer Weiterverarbeitung unterzogen, wobei als ein Ergebnis dieser Weiterverarbeitung der Fahrzeugführer darüber informiert wird, ob für eine ungehinderte Fahrt ein ausreichender Freiraum zur Verfügung steht oder nicht. Es wird somit möglich, durch eine kontinuierliche Auswertung der Bilddaten automatisch auch auf eine dynamische Veränderung des Fahrzeugumfeldes zu reagieren und den Fahrzeugführer darüber zu informieren, ob für eine ungehinderte Fahrt ein ausreichender Freiraum zur Verfügung steht oder nicht.

Die DE 10 2011 082 483 A1 betrifft ein Verfahren zur Unterstützung eines Fahrers eines Kraftfahrzeugs bei einem Fahrmanöver, das folgende Schritte umfasst: a) Erfassen von Daten der Umgebung des Kraftfahrzeugs, Auswerten der erfassten Daten zur Erfassung von Objekten und optische Darstellung der erfassten Objekte, b) Auswahl mindestens eines der erfassten Objekte durch den Fahrer des Kraftfahrzeugs, c) Bestimmung des geringsten Abstandes zwischen dem Kraftfahrzeug und dem mindestens einen ausgewählten Objekt d) Ausgabe einer Information an den Fahrer des Kraftfahrzeugs über den geringsten Abstand zwischen dem mindestens einen ausgewählten Objekt und im Kraftfahrzeug.

Die US 2015/0098623 A1 betrifft eine Bildverarbeitungsvorrichtung, die auf der Grundlage eines Bildes, das von einer in einem Auto installierten Kamera abgebildet wird, und der Entfernung zu einem Messpunkt an einem peripheren Objekt, berechnet durch einen im Auto installierten Entfernungssensor, einen virtuellen dreidimensionalen Raum zeichnet, in dem ein Umgebungsbereich um das Auto rekonstruiert wird. Die Bildverarbeitungsvorrichtung umfasst: eine Umrissberechnungseinheit, die konfiguriert ist, um einen Umriss einer Kreuzungsebene zwischen einer Mehrzahl von Gitterebenen, die in einem vorbestimmten Koordinatensystem definiert sind, und dem peripheren Objekt zu berechnen; und eine Bildverarbeitungseinheit, die so konfiguriert ist, dass sie den von der Umrissberechnungseinheit berechneten Umriss auf ein entsprechendes peripheres Objekt zeichnet, das in dem virtuellen dreidimensionalen Raum angeordnet ist; und die mehreren Gitterebenen mit Ebenen konfiguriert sind, die jeweils senkrecht zu einer X-Achse, einer Y-Achse und einer Z-Achse in dem vorbestimmten Koordinatensystem sind.

Das Dokument DE102010051204 offenbart ein Verfahren zum Darstellen eines Hindernisses für ein Fahrzeug mit den Schritten: - Erfassen eines Bereichs der Umgebung des Fahrzeugs mit einem Kamerasystem, wobei das Hindernis außerhalb des erfassten Bereichs liegt, - Darstellen des Bilds des erfassten Bereichs auf einem Bildschirm und - Detektieren des Hindernisses mit einer von dem Kamerasystem unabhängigen Sensoreinrichtung, sowie - Erzeugen eines virtuellen Objekts, das das detektierte Hindernis repräsentiert, - Darstellen auf dem Bildschirm eines weiteren Bereichs, der über den von der Kamera erfassten Bereich hinausgeht, und - Einblenden innerhalb des weiteren Bereichs von dem virtuellen Objekt mit einem Abstand zum Fahrzeug maßstabgenau auf dem Bildschirm dargestellt. In vorteilhafter Weise ist es damit möglich, ein Kamerabild mit Informationen zu ergänzen, die durch andere Sensorik gewonnen wurde. Es können also Hindernisse in das Kamerabild eingeblendet werden beziehungsweise das Bild kann mit einem oder mehreren Hindernissen ergänzt werden.

Ausgehend von dem oben genannten Stand der Technik liegt der Erfindung somit die Aufgabe zugrunde, ein Verfahren zum Darstellen einer Umgebung eines Fahrzeugs, wobei das Fahrzeug ein kamerabasiertes Umgebungserfassungssystem aufweist zur Erfassung der Umgebung des Fahrzeugs, zum Bewegen des Fahrzeugs zu einer Zielposition in der Umgebung und ein entsprechendes Fahrunterstützungssystem anzugeben, die ein einfaches Bewegen des Fahrzeugs zu der Zielposition in der Umgebung des Fahrzeugs ermöglichen.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Erfindungsgemäß ist somit ein Verfahren zum Darstellen einer Umgebung eines Fahrzeugs angegeben, gemäß Anspruch 1.

Erfindungsgemäß ist außerdem ein Fahrunterstützungssystem zum Darstellen einer Umgebung eines Fahrzeugs angegeben, mit einem kamerabasierten Umgebungserfassungssystem zur Erfassung der Umgebung des Fahrzeugs, und einer Verarbeitungseinheit, welche Bilder der Umgebung des Fahrzeugs empfängt, wobei das Fahrunterstützungssystem ausgeführt ist, das obige Verfahren durchzuführen.

Grundidee der vorliegenden Erfindung ist es also, eine Verbesserung beim Bewegen von Fahrzeugen zu einer Zielposition zu erreichen, indem eine möglichst intuitive Darstellung von Zielinformation wie z.B. einer Zielposition in der Umgebung des Fahrzeugs, erfolgt, so dass ein Fahrzeugführer in die Lage versetzt wird, mit geringem Zeitaufwand die Zielinformation zuverlässig zu verarbeiten. Dazu wird mit dem vorliegenden Verfahren eine Darstellung ermöglicht, die einerseits realitätsnah ist und einen hohen Grad an optischer Übereinstimmung mit der Umgebung des Fahrzeugs, wie sie auch von dem Fahrzeugführer wahrgenommen wird, aufweist, und andererseits zusätzliche Informationen basierend auf einer Verarbeitung von Sensorinformation betreffend die Umgebung des Fahrzeugs in der Form einer ersten Überlagerungsebene bereitstellt. Dadurch kann die zusätzliche Information einfach dargestellt werden, indem lediglich eine entsprechende Überlagerung des Umgebungsbildes in der Vogelperspektive mit der Information der ersten Überlagerungsebene erfolgt.

Das Fahrzeug kann ein prinzipiell beliebiges Fahrzeug sein. Das Fahrzeug ist vorzugsweise zum autonomen oder teil-autonomen Manövrieren zum Bewegen zu der Zielposition ausgeführt, insbesondere zum Parken des Fahrzeugs. Dabei kann es dem Fahrzeugführer ermöglicht werden, dass Fahrzeug vor der Durchführung einer Bewegung zu der Zielposition bereits zu verlassen.

Das Fahrunterstützungssystem stellt eine Fahrerassistenzfunktion oder allgemein eine Fahrunterstützungsfunktion bereit. Durch die Fahrerassistenzfunktion kann beispielsweise eine Umgebung des Fahrzeugs erfasst werden, um die wenigstens eine Zielposition zu bestimmen und ggf. eine optimale Trajektorie zu bestimmen, der ein Fahrzeugführer folgen kann, um das Fahrzeug zu der Zielposition zu bewegen.

Abhängig von der Art des Fahrunterstützungssystems kann die Zielposition beispielsweise ein Parkplatz zum Parken des Fahrzeugs sein. Beim Valet Parken kann die Zielposition ein Übergabepunkt zur Übergabe des Fahrzeugs an den Valet sein. Bei anderen Fahrunterstützungssystemen, wie beispielsweise einem automatischen Garagenparken, kann die Zielposition durch die Garage definiert sein. Beim gelernten Parken kann die Zielposition eine beliebige gelernte Parkposition sein, die unabhängig von einem vorgegebenen Parkplatz ist. Hierbei handelt es sich um eine beispielhafte, nicht abschließende Aufzählung möglicher Zielpositionen.

Die Umgebung betrifft einen Bereich um das Fahrzeug. Hiermit ist üblicherweise ein Bereich innerhalb eines Erfassungsbereichs von Umgebungssensoren des Fahrzeugs gemeint, d.h. ein Bereich in einem Radius von beispielsweise 5-50 Metern um das Fahrzeug, vorzugsweise in einem Radius von nicht mehr als etwa 20 Metern. Darüber hinaus kann der Bereich durch vorab von den Umgebungssensoren empfangene und gespeicherte Sensorinformation prinzipiell darüber hinaus erweitert werden.

Das Darstellen der Umgebung des Fahrzeugs umfasst eine Ausgabe von Information über eine grafische Benutzerschnittstelle in dem Fahrzeug, beispielsweise mit einem Bildschirm, vorzugsweise mit einem berührungsempfindlichen Bildschirm, um zusätzlich Eingaben des Fahrzeugführers zu empfangen.

Das kamerabasierte Umgebungserfassungssystem ermöglicht eine 360°-Erfassung der Umgebung. Solche kamerabasierten Umgebungserfassungssysteme umfassen beispielsweise ein Surroundview-Kamerasystem mit vier Kameras, die an dem Fahrzeug angebracht sind, d.h. an jeder Seite des Fahrzeugs ist eine der Kameras angebracht. Die Kameras sind vorzugsweise Weitwinkelkameras mit einem Öffnungswinkel von etwa 170°-180°. Durch diese vier Kameras können jeweils vier Bilder bereitgestellt werden, die gemeinsam die Umgebung des Fahrzeugs vollständig abdecken, d.h. eine 360°-Ansicht ermöglichen. Entsprechend werden Bilder der Umgebung des Fahrzeugs mit dem kamerabasierten Umgebungserfassungssystem zunächst als eine Mehrzahl Einzelbilder bereitgestellt.

Das Erzeugen eines Umgebungsbildes in der Vogelperspektive umfasst somit typischerweise eine Verarbeitung der Mehrzahl Einzelbilder, die von dem kamerabasierten Umgebungserfassungssystem gemeinsam bereitgestellt werden. Die Bilder werden entsprechend verarbeitet und/oder kombiniert, um die 360°-Ansicht zu erzeugen.

Das Bestimmen wenigstens einer Zielposition in der Umgebung des Fahrzeugs kann auf unterschiedliche Weise erfolgen. Dazu kann Sensorinformation unmittelbar verarbeitet werden, um die wenigstens eine Zielposition zu bestimmen. Alternativ oder zusätzlich kann beispielsweise basierend auf der Sensorinformation zunächst eine Umgebungskarte erzeugt werden, auf deren Basis dann die wenigstens eine Zielposition bestimmt wird. Das Bestimmen der Zielposition kann beispielsweise ein Erkennen eines Parkplatzes basierend auf Linienmarkierungen, Schildern oder anderen Kennzeichnungen, ein identifizieren eines Übergabepunktes an den Valet oder ein erkennen einer Garage umfassen.

Das Darstellen der wenigstens einen Zielposition in der ersten Überlagerungsebene betrifft eine Repräsentation der Zielposition zum Bewegen des Fahrzeugs. Die Zielposition wird vorzugsweise mit einer Begrenzungslinie, welche die Zielposition vollständig oder teilweise umgibt, dargestellt. Prinzipiell kann die Zielposition auch mit einer farblich abgesetzten Fläche oder mit einer Kontourlinie mit Umrissen des eigenen, zu der Zielposition zu bewegenden Fahrzeugs dargestellt werden. Die Zielposition kann eine exakte Position sein, oder beispielsweise ein Fenster definieren, in das das Fahrzeug bewegt wird. Entsprechend kann das Darstellen der jeweiligen Zielposition in der ersten Überlagerungsebene auf prinzipiell unterschiedliche Weisen erfolgen.

Durch das Überlagern des Umgebungsbildes mit der ersten Überlagerungsebene erfolgt eine kombinierte Darstellung von dem Umgebungsbild, wie es von dem Fahrzeugführer wahrgenommen wird, mit der Zielinformation, die hier eine Zielposition in der Umgebung des Fahrzeugs betrifft. Das Überlagern bedeutet dabei, dass vorhandene Teile des Umgebungsbildes durch die Überlagerungsebene ersetzt oder ergänzt werden, beispielsweise durch eine teilweise durchsichtige Überlagerung. Dabei ist es nicht erforderlich, dass das Umgebungsbild eine Bildfläche vollständig ausfüllt, was auch beispielsweise bei einer Abschattung von Teilen der Umgebung durch Hindernisse nicht möglich ist. Das Umgebungsbild kann auch lediglich mit Bildinformation der ersten Überlagerungsebene ergänzt werden.

Erfindungsgemäß umfasst das Verfahren folgende zusätzliche Schritte: Ermitteln eines nicht befahrbaren Bereichs in der Umgebung des Fahrzeugs, Darstellen des nicht befahrbaren Bereichs in einer zweiten Überlagerungsebene, welche die Umgebung des Fahrzeugs abdeckt, und Überlagern des Umgebungsbildes mit der zweiten Überlagerungsebene. Der nicht befahrbare Bereich kann entweder unmittelbar ermittelt werden, oder es kann zunächst ein befahrbarer Bereich ermittelt werden, und der nicht befahrbare Bereich wird durch eine Invertierung des befahrbaren Bereichs ermittelt. Die zweite Überlagerungsebene stellt eine zusätzliche Überlagerungsebene zu der ersten Überlagerungsebene dar, wobei die Überlagerungsebenen in prinzipiell beliebiger Reihenfolge zur Überlagerung zunächst des Umgebungsbildes und ggf. der jeweils anderen Überlagerungsebene verwendet werden können. Es gelten die obigen Ausführungen in Bezug auf die Überlagerung des Umgebungsbildes durch die erste Überlagerungsebene entsprechend.

Erfindungsgemäß umfasst das Darstellen des nicht befahrbaren Bereichs in einer zweiten Überlagerungsebene, welche die Umgebung des Fahrzeugs abdeckt, ein Erzeugen einer Darstellung des nicht befahrbaren Bereichs in einer Seitenansicht basierend auf den mit dem kamerabasierten Umgebungserfassungssystem bereitgestellten Bildern der Umgebung des Fahrzeugs. Eine solche Seitenansicht entspricht einer Darstellung, wie sie beispielsweise bei einem adaptiven Bowl View verwendet wird. Die Seitenansicht ermöglicht einen hohen Wiederkennungswert der Umgebung in dem Umgebungsbild. Dabei wird die Seitenansicht vorzugsweise verzerrungsfrei oder zumindest mit reduzierten Verzerrungen erzeugt, wofür eine entsprechende Bildverarbeitung der Bilder des kamerabasierten Umgebungserfassungssystems durchgeführt wird.

Erfindungsgemäß umfasst das Verfahren folgende zusätzliche Schritte: Ermitteln wenigstens eines Hindernisses in der Umgebung des Fahrzeugs, Darstellen des wenigstens einen Hindernisses in einer dritten Überlagerungsebene, welche die Umgebung des Fahrzeugs abdeckt, und Überlagern des Umgebungsbildes mit der dritten Überlagerungsebene. Das Ermitteln des wenigstens eines Hindernisses kann unmittelbar basierend auf Sensorinformation erfolgen. Alternativ oder zusätzlich kann beispielsweise basierend auf der Sensorinformation eine Umgebungskarte erzeugt werden, die als Basis zum Ermitteln des wenigstens eines Hindernisses dient. Die dritte Überlagerungsebene stellt eine zusätzliche Überlagerungsebene zu der ersten und ggf. der zweiten Überlagerungsebene dar, wobei die Überlagerungsebenen in prinzipiell beliebiger Reihenfolge zur Überlagerung zunächst des Umgebungsbildes und ggf. der anderen Überlagerungsebene(n) verwendet werden können. Die obigen Ausführungen in Bezug auf die Überlagerung des Umgebungsbildes durch die erste Überlagerungsebene gelten entsprechend.

In vorteilhafter Ausgestaltung der Erfindung umfasst das Darstellen des wenigstens einen Hindernisses in einer dritten Überlagerungsebene ein Darstellen von Begrenzungen des wenigstens einen Hindernisses. Das wenigstens eine Hindernis wird vorzugsweise mit einer Begrenzungslinie, die das wenigstens eine Hindernis vollständig oder teilweise umgibt, dargestellt. Prinzipiell kann das wenigstens eine Hindernis auch mit einer farblich abgesetzte Fläche oder auch anders dargestellt werden.

In vorteilhafter Ausgestaltung der Erfindung umfasst das Verfahren einen Schritt zum Identifizieren des wenigstens einen Hindernisses, und das Darstellen des wenigstens einen Hindernisses in einer dritten Überlagerungsebene, welche die Umgebung des Fahrzeugs abdeckt, umfasst ein Darstellen des wenigstens einen Hindernisses basierend auf der Identifizierung des wenigstens einen Hindernisses. Das Identifizieren des wenigstens einen Hindernisses betrifft eine Klassifizierung, um beispielsweise Drittfahrzeuge, Bäume, Personen, Gebäude, Mülltonnen oder andere Hindernisse zu identifizieren. Darauf basierend kann eine Darstellung des Hindernisses in Übereinstimmung mit der jeweiligen Klasse gewählt werden. Es wird also eine Art Platzhalter des wenigstens einen Hindernisses basierend auf der Identifikation ausgewählt und in der dritten Überlagerungsebene dargestellt. Das Darstellen des Hindernisses erfolgt dabei vorzugsweise in Übereinstimmung mit der Darstellung des Umgebungsbildes in einer Draufsicht. Alternativ kann das Hindernis in einer Seitenansicht dargestellt werden.

In vorteilhafter Ausgestaltung der Erfindung umfasst das Darstellen des wenigstens einen Hindernisses in einer dritten Überlagerungsebene, welche die Umgebung des Fahrzeugs abdeckt, ein Bereitstellen eines Kamerabildes des wenigstens einen Hindernisses. Das Kamerabild ermöglicht eine besonders realitätsnahe Darstellung des wenigstens einen Hindernisses, wodurch eine einfache Zuordnung der Darstellung mit der Umgebung, wie sie von dem Fahrzeugführer wahrgenommen wird, ermöglicht wird. Das Kamerabild wird dabei vorzugsweise in Übereinstimmung mit der Darstellung des Umgebungsbildes in einer Draufsicht erzeugt bzw. es erfolgt eine Projektion des Kamerabildes in die Draufsicht.

In vorteilhafter Ausgestaltung der Erfindung umfasst das Darstellen des wenigstens einen Hindernisses in einer dritten Überlagerungsebene, welche die Umgebung des Fahrzeugs abdeckt, eine distanzabhängige Darstellung des wenigstens einen Hindernisses. Insbesondere umfasst die distanzabhängige Darstellung eine Darstellung des Hindernisses oder von Bereichen des Hindernisses mit verschiedenen Farben abhängig von der Distanz. So können nahe Hindernisse beispielsweise mit einer roten Farbe dargestellt werden, während entfernte Hindernisse beispielsweise mit einer grünen Farbe oder mit einer schwarzen oder grauen Farbe dargestellt werden können. Eine solche Darstellung bietet sich vor allem für Bereiche an, die nicht mehr aktiv von den Umgebungssensoren erfasst werden. Damit kann einem Benutzer angezeigt werden, dass dieser Bereich zuvor von einem der Umgebungssensoren erfasst wurde, aber keine aktive Erfassung mehr erfolgt. Auch können beispielsweise nahe Bereiche eines Hindernisses mit einer anderen Farbe dargestellt werden als entfernte Bereiche des Hindernisses. Anstatt einer einheitlichen Farbe kann auch eine farbliche Darstellung mit einem Farbverlauf oder einem farbigen Muster erfolgen.

Erfindungsgemäß umfasst das Darstellen des wenigstens einen Hindernisses in einer dritten Überlagerungsebene, welche die Umgebung des Fahrzeugs abdeckt, ein Erzeugen einer Darstellung des wenigstens einen Hindernisses in einer Seitenansicht basierend auf den mit dem kamerabasierten Umgebungserfassungssystem bereitgestellten Bildern der Umgebung des Fahrzeugs. Eine solche Seitenansicht entspricht einer Darstellung, wie sie beispielsweise bei einem adaptiven Bowl View verwendet wird. Die Seitenansicht ermöglicht einen hohen Wiederkennungswert des Hindernisses in dem Umgebungsbild. Dabei wird die Seitenansicht vorzugsweise verzerrungsfrei oder mit reduzierten Verzerrungen erzeugt, wofür eine entsprechende Bildverarbeitung der Bilder des kamerabasierten Umgebungserfassungssystems erforderlich ist.

In vorteilhafter Ausgestaltung der Erfindung erfolgt das Bestimmen wenigstens einer Zielposition in der Umgebung des Fahrzeugs und/oder das Bestimmen eines nicht befahrbaren Bereichs in der Umgebung des Fahrzeugs und/oder das Ermitteln des wenigstens einen Hindernisses in der Umgebung des Fahrzeugs unter Berücksichtigung der mit dem kamerabasierten Umgebungserfassungssystem bereitgestellten Bilder der Umgebung des Fahrzeugs. Das kamerabasierte Umgebungserfassungssystem dient also als Umgebungssensor zur Überwachung der Umgebung des Fahrzeugs. Prinzipiell sind damit keine weiteren Umgebungssensoren erforderlich, können aber zur Verbesserung der Überwachung verwendet werden.

In vorteilhafter Ausgestaltung der Erfindung umfasst das Verfahren einen Schritt zum Empfangen von Sensorinformation wenigstens eines weiteren Umgebungssensors, insbesondere eines LiDAR-basierten Umgebungssensors, eines Radarsensors und/oder einer Mehrzahl Ultraschallsensoren, der zumindest einen Teilbereich der Umgebung des Fahrzeugs erfasst, und das Bestimmen wenigstens einer Zielposition in der Umgebung des Fahrzeugs und/oder das Bestimmen eines nicht befahrbaren Bereichs in der Umgebung des Fahrzeugs und/oder das Ermitteln des wenigstens einen Hindernisses in der Umgebung des Fahrzeugs erfolgt unter Berücksichtigung der Sensorinformation des wenigstens einem weiteren Umgebungssensors. Durch eine geeignete Auswahl von Umgebungssensoren, die in beliebiger Kombination und Anzahl an dem Fahrzeug angebracht sein können, wird somit eine besonders zuverlässige Erfassung der Umgebung des Fahrzeugs ermöglicht, um die wenigstens eine Zielposition, den nicht befahrbaren Bereich und/oder das wenigstens eine Hindernis zu bestimmen bzw. zu erfassen. Das kamerabasierte Umgebungserfassungssystem kann dabei zusätzliche Sensorinformation bereitstellen, die gemeinsam mit der Sensorinformation des wenigstens eines weiteren Umgebungssensors verarbeitet werden, um die wenigstens eine Zielposition, den nicht befahrbaren Bereich und/oder das wenigstens eine Hindernis zu bestimmen bzw. zu erfassen. Alternativ wird lediglich die Sensorinformation des wenigstens einen weiteren Umgebungssensors verwendet. Bei der Verwendung mehrerer gleichartiger und/oder verschiedenartiger Umgebungssensoren kann eine Fusion der Sensorinformation der Umgebungssensoren erfolgen.

Erfindungsgemäß umfasst das Erzeugen eines Umgebungsbildes in einer Vogelperspektive basierend auf den mit dem kamerabasierten Umgebungserfassungssystem bereitgestellten Bildern der Umgebung des Fahrzeugs ein Erzeugen des Umgebungsbildes nach der Art eines Bowl-View. Dabei handelt es sich um eine besondere Ansicht nach der Art einer Schüssel, bei der die Ränder nach oben gezogen werden. Im Gegensatz zu einer Darstellung in einer Vogelperspektive können also die Ränder teilweise in einer Seitenansicht dargestellt werden. Dies verbessert gegenüber einer reinen Draufsicht oder Vogelperspektive insbesondere in entfernten Bereichen die Übereinstimmung mit der Umgebung, wie sie von dem Fahrzeugführer wahrgenommen wird.

In vorteilhafter Ausgestaltung der Erfindung umfasst das Darstellen der wenigstens einen Zielposition in einer ersten Überlagerungsebene, welche die Umgebung des Fahrzeugs abdeckt, ein Darstellen einer Trajektorie zum Bewegen des Fahrzeugs zum Erreichen der Zielposition. Die Trajektorie ermöglicht eine gute Einschätzung der Bewegung zum Erreichen der Zielposition. Insbesondere kann bereits vorab überprüft werden, ob das Fahrzeug überhaupt zu der Zielposition bewegt werden kann. Die Trajektorie kann mehrere Züge mit Fahrtrichtungsumkehr umfassen.

In vorteilhafter Ausgestaltung der Erfindung umfasst das Darstellen einer Trajektorie zum Bewegen des Fahrzeugs zum Erreichen der Zielposition ein Darstellen eines von dem Fahrzeug beim Fahren der Trajektorie überstrichenen Bereichs. Damit kann abhängig von dem befahrbaren Bereich einfach festgestellt werden, ob eine Gefahr eines Verlassens des befahrbaren Bereichs besteht. Der von dem Fahrzeug beim Fahren der Trajektorie überstrichene Bereich wird vorzugsweise abhängig von den Abmessungen des jeweiligen Fahrzeugs, welches das Fahrunterstützungssystem umfasst, dargestellt. Alternativ kann ein Mittelwert oder ein Maximalwert für übliche Fahrzeuge als entsprechende Abmessung des Fahrzeugs verwendet werden.

Alternativ oder zusätzlich können zusätzliche Zielinformationen dargestellt werden, wie beispielsweise Haltepunkte entlang der Trajektorie, ein Geschwindigkeitsprofil beim Fahren entlang der Trajektorie, wobei vorzugsweise eine aktuelle Geschwindigkeit mittels unterschiedlicher Farben kodiert wird, eine Betätigung einer Zufahrtsbeschränkung (Garagentor, Gartentor, Poller (versenkbar), Schranke) beim Fahren entlang der Trajektorie, oder andere.

In vorteilhafter Ausgestaltung der Erfindung umfasst das Verfahren eine Schritt zum Speichern der mit dem kamerabasierten Umgebungserfassungssystem bereitgestellten Bilder der Umgebung des Fahrzeugs, und das Erzeugen eines Umgebungsbildes in einer Vogelperspektive umfasst ein Erzeugen wenigstens eines ersten Bereichs des Umgebungsbildes basierend auf aktuell mit dem kamerabasierten Umgebungserfassungssystem bereitgestellten Bildern der Umgebung des Fahrzeugs und wenigstens eines zweiten Bereichs mit gespeicherten Bildern der Umgebung des Fahrzeugs. Damit kann gegenüber einer Verwendung nur von aktuellen Bildern ein vergrößerter Bereich um das Fahrzeug abgedeckt werden, wobei selbstverständlich eine Aktualität der gespeicherten Bilder zu berücksichtigen ist. Das Bestimmen der wenigstens einen Zielposition in der Umgebung des Fahrzeugs kann ebenfalls basierend auf den aktuell mit dem kamerabasierten Umgebungserfassungssystem bereitgestellten Bildern der Umgebung des Fahrzeugs in Kombination mit gespeicherten Bildern durchgeführt werden. Entsprechendes gilt für das Ermitteln der Hindernisse in der Umgebung. Dabei kann das Umgebungsbild eine unterschiedliche Darstellung des wenigstens einen ersten Bereichs und des wenigstens einen zweiten Bereichs aufweisen, um auf eine potentielle Gefahr von Änderungen in dem zweiten Bereich ausgehend von den gespeicherten Bildern hinzuweisen. Der erste und der zweite Bereich können beispielsweise unterschiedliche Einfärbungen (rot, grau) aufweisen.

Nachfolgend wird die Erfindung unter Bezugnahme auf die anliegende Zeichnung anhand bevorzugter Ausführungsformen näher erläutert. Die dargestellten Merkmale können sowohl jeweils einzeln als auch in Kombination einen Aspekt der Erfindung darstellen. Merkmale verschiedener Ausführungsbeispiele sind übertragbar von einem Ausführungsbeispiel auf ein anderes.

Es zeigt
- Fig. 1: eine schematische Darstellung eines Fahrzeugs mit einem Fahrunterstützungssystem gemäß einer ersten, bevorzugten Ausführungsform in einer Seitenansicht,
- Fig. 2: eine erste beispielhafte Darstellung des Fahrzeugs mit der Umgebung um das Fahrzeug in Übereinstimmung mit der ersten Ausführungsform,
- Fig. 3: eine zweite beispielhafte Darstellung des Fahrzeugs mit der Umgebung um das Fahrzeug in Übereinstimmung mit einer zweiten Ausführungsform,
- Fig. 4: eine dritte beispielhafte Darstellung des Fahrzeugs mit der Umgebung um das Fahrzeug in Übereinstimmung mit einer dritten Ausführungsform,
- Fig. 5: eine vierte beispielhafte Darstellung des Fahrzeugs mit der Umgebung um das Fahrzeug nach der Art eines Bowl View in Übereinstimmung mit einer vierten Ausführungsform,
- Fig. 6: eine fünfte beispielhafte Darstellung des Fahrzeugs mit der Umgebung um das Fahrzeug nach der Art eines adaptiven Bowl View in Übereinstimmung mit einer fünften Ausführungsform, und
- Fig. 7: ein Ablaufdiagram eines Verfahrens zum Darstellen einer Umgebung des Fahrzeugs aus Fig. 1 in Übereinstimmung mit dem Fahrzeug und dem Fahrunterstützungssystem des ersten Ausführungsbeispiels.

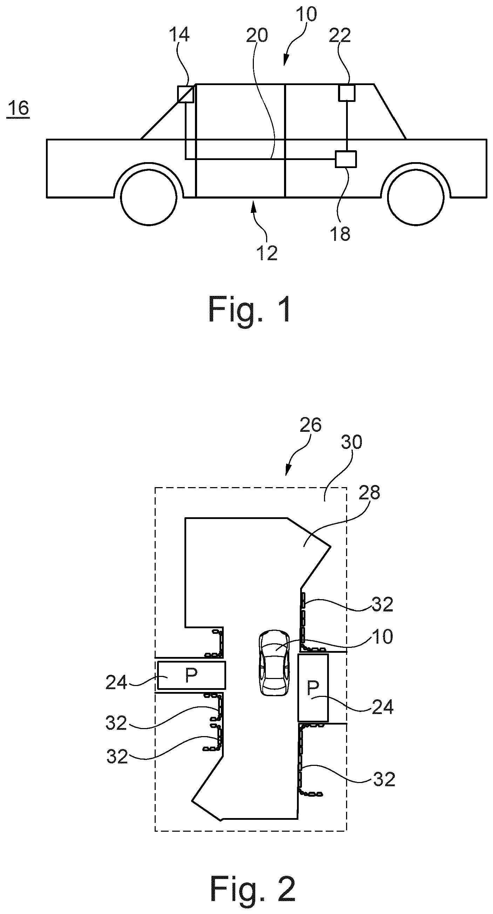

Die Figur 1 zeigt ein Fahrzeug 10 mit einem Fahrunterstützungssystem 12 gemäß einer ersten, bevorzugten Ausführungsform. Das Fahrzeug 10 ist ein prinzipiell beliebiges Fahrzeug 10, das vorzugsweise zum autonomen oder teil-autonomen manövrieren ausgeführt ist, beispielsweise zum Parken des Fahrzeugs 10. Beim autonomen Fahren wird einem Fahrzeugführer ermöglicht, dass Fahrzeug 10 bereits vor der Durchführung eines entsprechenden Parkvorgangs zu verlassen.

Das Fahrunterstützungssystem 12 umfasst ein kamerabasiertes Umgebungserfassungssystem 14, das eine 360°-Erfassung einer Umgebung 16 des Fahrzeugs 10 durchführt. Das kamerabasierten Umgebungserfassungssystem 14, das hier der Einfachheit halber als einzelnes Gerät dargestellt ist, umfasst in diesem Ausführungsbeispiel vier einzelne, in den Figuren nicht einzeln dargestellte Surroundview-Kameras, die an dem Fahrzeug 10 angebracht sind. Im Detail ist an jeder Seite des Fahrzeugs 10 eine der vier Kameras angebracht. Die vier Kameras sind vorzugsweise Weitwinkelkameras mit einem Öffnungswinkel von etwa 170°-180°. Durch die vier Kameras werden jeweils vier Bilder bereitgestellt, die gemeinsam die Umgebung 16 des Fahrzeugs 10 vollständig abdecken, d.h. eine 360°-Ansicht ermöglichen.

Das Fahrunterstützungssystem 12 umfasst weiterhin eine Verarbeitungseinheit 18, welche die Bilder von dem kamerabasierten Umgebungserfassungssystem 14 über einen Datenbus 20 empfängt.

Das Fahrunterstützungssystem 12 umfasst außerdem einen Umgebungssensor 22, der in diesem Ausführungsbeispiel als Radarsensor oder als LiDAR-basierter Sensor ausgeführt ist. Der Umgebungssensor 22 überträgt Sensorinformation betreffend die Umgebung 16 das Fahrzeugs 10 über den Datenbus 20 an die Verarbeitungseinheit 18. In einer alternativen Ausführungsform ist der Umgebungssensor 22 als Ultraschallsensoreinheit mit einer Mehrzahl einzelner Ultraschallsensoren ausgeführt.

Fahrunterstützungssystem 12 stellt eine Fahrerassistenzfunktion oder allgemein eine Fahrunterstützungsfunktion bereit, wobei die Umgebung 16 des Fahrzeugs 10 erfasst wird, um beim Bestimmen von Zielpositionen 24 zu helfen und ggf. eine optimale Trajektorie zu bestimmen, der ein Fahrzeugführer folgen kann, um das Fahrzeug 10 zu der Zielposition 24 zu bewegen.

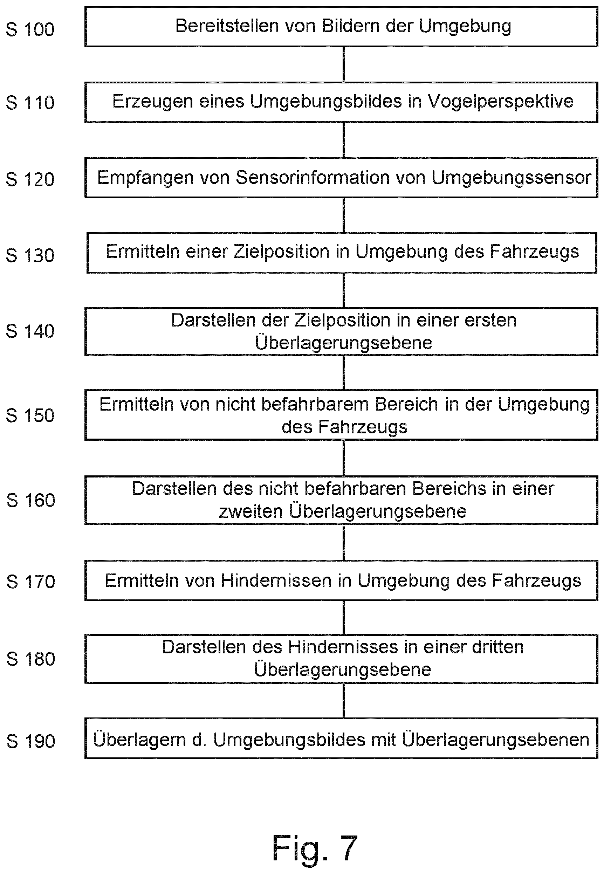

Entsprechend ist das Fahrunterstützungssystem 12 in diesem Ausführungsbeispiel ausgeführt, ein Verfahren zum Darstellen der Umgebung 16 des Fahrzeugs 10 durchzuführen, um das Fahrzeug 10 zu einer Zielposition 24 in der Umgebung 16 zu bewegen. Das Verfahren ist in Figur 7 als Ablaufdiagramm wiedergegeben und wird nachfolgend unter zusätzlichem Bezug auf die Figuren 2 bis 6 beschrieben. Die Figuren 2 bis 6 betreffen unterschiedliche Darstellungen der Umgebung 16 des Fahrzeugs 10, die alle mit dem gleichen Fahrunterstützungssystem 12 erzeugt werden können. Eine Änderung der Darstellung erfordert lediglich eine geänderte Konfiguration bzw. Programmierung des Fahrunterstützungssystems 12. Das Fahrunterstützungssystem 12 des ersten Ausführungsbeispiels ist ausgeführt zum autonomen Parken des Fahrzeugs 10.

Entsprechend ist die Zielposition 24 in diesem Ausführungsbeispiel ein Parkplatz 24 zum Parken des Fahrzeugs 10.

Das Verfahren beginnt mit Schritt S100, der ein Bereitstellen von Bildern der Umgebung 16 des Fahrzeugs 10 mit dem kamerabasierten Umgebungserfassungssystem 14 umfasst. Die vier einzelnen Bilder werden jeweils gemeinsam über den Datenbus 20 and die Verarbeitungseinheit 18 des Fahrunterstützungssystems 12 übertragen.

Schritt S110 betrifft ein Erzeugen eines Umgebungsbildes 26 in einer Vogelperspektive basierend auf den mit dem kamerabasierten Umgebungserfassungssystem 14 bereitgestellten Bildern der Umgebung 16 des Fahrzeugs 10. Entsprechend wird das Umgebungsbild 26 aus einer Verarbeitung der Einzelbilder, die von dem kamerabasierten Umgebungserfassungssystem 14 gemeinsam bereitgestellt werden, erzeugt. Die Einzelbilder werden entsprechend verarbeitet und/oder kombiniert, um die 360°-Ansicht zu erzeugen. Eine entsprechende Darstellung mit dem Umgebungsbild 26 in der Vogelperspektive ist in den Figuren 2 bis 4 gezeigt.

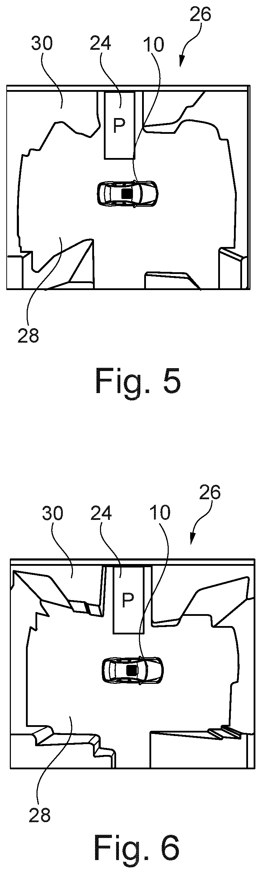

Gemäß der beanspruchten Erfindung die in Figur 5 dargestellt ist, wird das Umgebungsbild 26 nach der Art eines Bowl-View erzeugt. Der Bowl View betrifft eine besondere Ansicht nach der Art einer Schüssel, bei der die Ränder nach oben gezogen werden, so dass im Gegensatz zu einer Darstellung in der Vogelperspektive Ränder zumindest teilweise in einer Seitenansicht dargestellt sind. Die Darstellung des Umgebungsbildes 26 erfolgt somit nach der Art eines Bowl-View
In einer alternativen, fünften Ausführungsform, die in Figur 6 dargestellt ist, wird das Umgebungsbild 26 nach der Art eines adaptiven Bowl-View erzeugt.

Schritt S120 betrifft ein Empfangen von Sensorinformation des Umgebungssensors 22, der zumindest einen Teilbereich der Umgebung 16 des Fahrzeugs 10 erfasst. Die Sensorinformation des Umgebungssensors 22 wird über den Datenbus 20 an die Verarbeitungseinheit 18 übertragen.

Schritt S130 betrifft ein Bestimmen wenigstens einer Zielposition 24 in der Umgebung 16 des Fahrzeugs 10. Das Bestimmen der wenigstens einen Zielposition 24 betrifft in diesem Ausführungsbeispiel das Ermitteln eines Parkplatzes als Zielposition 24. Das Bestimmen der wenigstens einen Zielposition 24 erfolgt in diesem Ausführungsbeispiel unter Berücksichtigung der Sensorinformation des Umgebungssensors 22 zusammen mit der Sensorinformation des kamerabasierten Umgebungserfassungssystems 14, d.h. den von dem kamerabasierten Umgebungserfassungssystem 14 bereitgestellten Bildern. Die Sensorinformation des Umgebungssensors 22 und des kamerabasierten Umgebungserfassungssystems 14, wird gemeinsam verarbeitet, um den wenigstens einen Parkplatz 24 zu erfassen. Dabei wird eine an sich optionale Fusion der Sensorinformation des Umgebungssensors 22 und des kamerabasierten Umgebungserfassungssystems 14 durchgeführt.

Das Ermitteln des wenigstens einen Parkplatzes 24 in der Umgebung 16 des Fahrzeugs 10 kann auf unterschiedliche Weise erfolgen. Dazu kann die Sensorinformation des Umgebungssensors 22 zusammen mit der Sensorinformation des kamerabasierten Umgebungserfassungssystems 14 unmittelbar verarbeitet werden, um den wenigstens einen Parkplatz 24 zu bestimmen. Alternativ oder zusätzlich kann basierend auf der Sensorinformation eine Umgebungskarte erzeugt werden, die als Basis zum Ermitteln des Parkplatzes 24 dient.

Schritt S140 betrifft ein Darstellen der wenigstens einen Zielposition 24, d.h. des wenigstens einen Parkplatzes 24, in einer ersten Überlagerungsebene, welche die Umgebung 16 des Fahrzeugs 10 abdeckt. Das Darstellen des wenigstens einen Parkplatzes 24 in der ersten Überlagerungsebene betrifft eine Repräsentation des Parkplatzes 24 zum Parken des Fahrzeugs 10. Der Parkplatz 24 wird in diesem Ausführungsbeispiel mit einer Begrenzungslinie, die den Parkplatz 24 vollständig umgibt, dargestellt. Alternativ oder zusätzlich kann der Parkplatz 24 mit einer farblich abgesetzten Fläche dargestellt werden.

Schritt S150 betrifft ein Ermitteln eines nicht befahrbaren Bereichs 30 in der Umgebung 16 des Fahrzeugs 10. Der nicht befahrbare Bereich 30 kann entweder unmittelbar ermittelt werden, oder es kann zunächst ein befahrbarer Bereich 28 ermittelt werden, und der nicht befahrbare Bereich 30 wird durch eine Invertierung des befahrbaren Bereichs 28 ermittelt.

Auch das Ermitteln des nicht befahrbaren Bereichs 30 in der Umgebung 16 des Fahrzeugs 10 erfolgt unter Berücksichtigung der Sensorinformation des Umgebungssensors 22 zusammen mit der Sensorinformation des kamerabasierten Umgebungserfassungssystems 14, d.h. den von dem kamerabasierten Umgebungserfassungssystem 14 bereitgestellten Bildern. Die Sensorinformation des Umgebungssensors 22 und des kamerabasierten Umgebungserfassungssystems 14, wird gemeinsam verarbeitet, um den nicht befahrbaren Bereichs 30 zu erfassen. Dabei wird eine an sich optionale Fusion der Sensorinformation des Umgebungssensors 22 und des kamerabasierten Umgebungserfassungssystems 14 durchgeführt.

Das Ermitteln des nicht befahrbaren Bereichs 30 in der Umgebung 16 des Fahrzeugs 10 kann auf unterschiedliche Weise erfolgen. Dazu kann die Sensorinformation des Umgebungssensors 22 zusammen mit der Sensorinformation des kamerabasierten Umgebungserfassungssystems 14 unmittelbar verarbeitet werden, um den nicht befahrbaren Bereichs 30 zu bestimmen. Alternativ oder zusätzlich kann basierend auf der Sensorinformation eine Umgebungskarte erzeugt werden, die als Basis zum Ermitteln des nicht befahrbaren Bereichs 30 dient.

Schritt S160 betrifft ein Darstellen des nicht befahrbaren Bereichs 30 in einer zweiten Überlagerungsebene, welche die Umgebung 16 des Fahrzeugs 10 abdeckt. Die zweite Überlagerungsebene stellt eine zusätzliche Überlagerungsebene zu der ersten Überlagerungsebene dar. In den Darstellungen der Figuren 2 bis 4 wird der nicht befahrbare Bereich 30 durch eine einheitliche Fläche mit einer vorgegebenen Farbe markiert, so dass das Umgebungsbild 26 in dem nicht befahrbaren Bereich 30 von dieser Fläche überlagert wird und nicht wahrgenommen werden kann.

Gemäß der beanspruchten Erfindung die in den Figuren 5 und 6 entsprechend dargestellt ist, wird zur Darstellung des nicht befahrbaren Bereichs 30 eine Seitenansicht basierend auf den mit dem kamerabasierten Umgebungserfassungssystem 14 bereitgestellten Bildern der Umgebung 16 des Fahrzeugs 10 erzeugt. Die Seitenansicht wird dabei vorzugsweise dynamisch generiert und fortlaufend angepasst. Eine solche Seitenansicht entspricht einer Darstellung, wie sie beispielsweise bei einem Bowl View, der in Figur 5 dargestellt ist, oder einem adaptiven Bowl View, der in Figur 6 dargestellt ist, verwendet wird. Beim adaptiven Bowl View wird die Seitenansicht mit reduzierten Verzerrungen erzeugt, wofür eine entsprechende Bildverarbeitung der Bilder des kamerabasierten Umgebungserfassungssystems 14 erfolgt.

Schritt S170 betrifft ein Ermitteln wenigstens eines Hindernisses 32 in der Umgebung 16 des Fahrzeugs 10.

Auch das Ermitteln des wenigstens eines Hindernisses 32 in der Umgebung 16 des Fahrzeugs 10 erfolgt unter Berücksichtigung der Sensorinformation des Umgebungssensors 22 zusammen mit der Sensorinformation des kamerabasierten Umgebungserfassungssystems 14, d.h. den von dem kamerabasierten Umgebungserfassungssystem 14 bereitgestellten Bildern. Die Sensorinformation des Umgebungssensors 22 und des kamerabasierten Umgebungserfassungssystems 14, wird gemeinsam verarbeitet, um das wenigstens eine Hindernis 32 zu erfassen. Dabei wird eine an sich optionale Fusion der Sensorinformation des Umgebungssensors 22 und des kamerabasierten Umgebungserfassungssystems 14 durchgeführt.

Das Ermitteln des wenigstens eines Hindernisses 32 kann unmittelbar basierend auf der Sensorinformation des Umgebungssensors 22 zusammen mit dem kamerabasierten Umgebungserfassungssystem 14 erfolgen. Alternativ oder zusätzlich kann basierend auf der Sensorinformation eine Umgebungskarte erzeugt werden, die als Basis zum Ermitteln des wenigstens eines Hindernisses 32 dient.

Schritt S180 betrifft ein Darstellen des wenigstens einen Hindernisses 32 in einer dritten Überlagerungsebene, welche die Umgebung 16 des Fahrzeugs 10 abdeckt.

In dem ersten Ausführungsbeispiel, das in Figur 2 dargestellt ist, umfasst das Darstellen des wenigstens einen Hindernisses 32 in der dritten Überlagerungsebene ein Darstellen von Begrenzungslinien des wenigstens einen Hindernisses 32. In diesem Ausführungsbeispiel markieren die Begrenzungslinien lediglich dem Fahrzeug 10 zugewandte Seiten der Hindernisse 32. Alternativ oder zusätzlich können die Hindernisse 32 mit einer farblich abgesetzten Fläche dargestellt werden. Dabei erfolgt auf in Figur 2 nicht dargestellter Weise eine distanzabhängige Darstellung der Hindernisse 32 mit verschiedenen Farben abhängig von der Distanz. In diesem Ausführungsbeispiel werden nahe Bereiche eines Hindernisses 32 beispielsweise mit einer roten Farbe dargestellt, während entfernte Bereiche des Hindernisses 32 mit einer grünen Farbe oder mit einer schwarzen oder grauen Farbe dargestellt werden. Eine solche Darstellung bietet sich vor allem für Bereiche an, die nicht mehr aktiv von den Umgebungssensoren erfasst werden. Damit kann einem Benutzer angezeigt werden, dass dieser Bereich zuvor von einem der Umgebungssensoren erfasst wurde, aber keine aktive Erfassung mehr erfolgt.

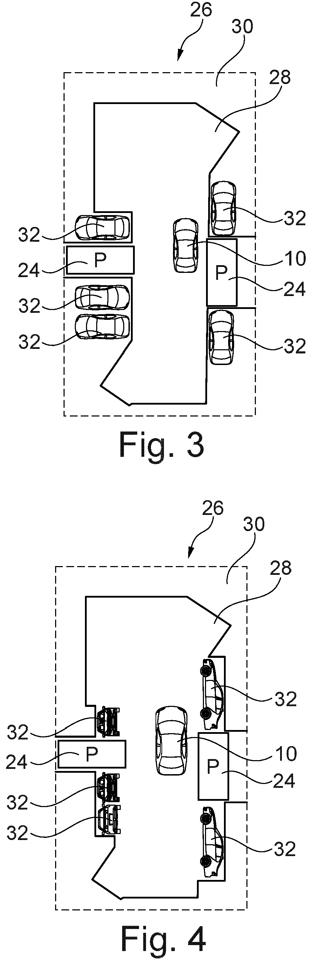

In dem zweiten Ausführungsbeispiel, das in Figur 3 dargestellt ist, wird zunächst ein Schritt zum Identifizieren des wenigstens einen Hindernisses 32 durchgeführt. Dies umfasst eine Klassifizierung der Hindernisse 32, um beispielsweise Drittfahrzeuge, Bäume, Personen, Gebäude, Mülltonnen oder andere Hindernisse 32 zu identifizieren. In den hier gezeigten Ausführungsbeispielen sind die Hindernisse 32 Drittfahrzeuge. Basierend auf der Identifizierung wird eine Darstellung für das Hindernis 32 in Übereinstimmung mit der jeweiligen Klasse gewählt, die in der dritten Überlagerungsebene verwendet wird. Das Darstellen des Hindernisses 32 erfolgt in diesem Beispiel, das nicht von den Ansprüchen abgedeckt ist, in Übereinstimmung mit der Darstellung des Umgebungsbildes 26 in einer Draufsicht. Erfindungsgemäß wird das Hindernis 32 in einer Seitenansicht dargestellt.

Entsprechend wird das wenigstens eine Hindernis 32 basierend auf der Identifizierung dargestellt.

In dem dritten Ausführungsbeispiel, das in Figur 4 dargestellt ist, umfasst das Darstellen des wenigstens einen Hindernisses 32 in der dritten Überlagerungsebene ein Bereitstellen eines Kamerabildes des wenigstens einen Hindernisses 32, wie es von dem kamerabasierten Umgebungserfassungssystem 14 aufgenommen wurde. Dadurch wird eine realitätsnahe Darstellung des wenigstens einen Hindernisses 32 erzeugt. Das Kamerabild wird dabei in einem Beispiel, das nicht von den Ansprüchen abgedeckt ist, in Übereinstimmung mit der Darstellung des Umgebungsbildes 26 in einer Draufsicht erzeugt bzw. es erfolgt eine Projektion des Kamerabildes in die Draufsicht. Erfindungsgemäß wird das Kamerabild des wenigstens einen Hindernisses 32 in einer Seitenansicht basierend auf den mit dem kamerabasierten Umgebungserfassungssystem 14 bereitgestellten Bildern der Umgebung 16 des Fahrzeugs 10 erzeugt. Das wenigstens eine Hindernis 32 wird somit nach der Art einer Darstellung, wie sie beispielsweise bei einem adaptiven Bowl View verwendet wird, visualisiert. Die Seitenansicht wird vorzugsweise verzerrungsfrei oder mit reduzierten Verzerrungen erzeugt, wofür eine entsprechende Bildverarbeitung der Bilder des kamerabasierten Umgebungserfassungssystems 14 durchgeführt wird.

Schritt S190 betrifft ein Überlagern des Umgebungsbildes 26 mit der ersten, zweiten und dritten Überlagerungsebene. Beim Überlagern werden vorhandene Teile des Umgebungsbildes 26 durch die Information der Überlagerungsebenen ersetzt oder ergänzt, beispielsweise durch eine teilweise durchsichtige Überlagerung. Dabei ist es nicht erforderlich, dass das Umgebungsbild 26 eine Bildfläche vollständig ausfüllt. In dem Fall wird das Umgebungsbild 26 lediglich mit Bildinformation der Überlagerungsebenen ergänzt. Dabei können die Überlagerungsebenen in prinzipiell beliebiger Reihenfolge angeordnet sein und sich ggf. gegenseitig überlagern. Das so überlagerte Umgebungsbild 26 kann über ein User Interface des Fahrzeugs 10 ausgegeben und dem Fahrzeugführer angezeigt werden.

Durch das Überlagern des Umgebungsbildes 26 mit den Überlagerungsebenen erfolgt eine kombinierte Darstellung von der Umgebung 16, wie sie von dem Fahrzeugführer wahrgenommen wird, zusammen mit der Parkinformation, die hier eine Position des Parkplatzes 24 in der Umgebung 16 des Fahrzeugs 10 betrifft.

### Bezugszeichenliste

- 10: Fahrzeug
- 12: Fahrunterstützungssystem
- 14: kamerabasiertes Umgebungserfassungssystem
- 16: Umgebung
- 18: Verarbeitungseinheit
- 20: Datenbus
- 22: Umgebungssensor
- 24: Zielposition, Parkplatz
- 26: Umgebungsbild
- 28: befahrbarer Bereich
- 30: nicht befahrbarer Bereich
- 32: Hindernis

## Patentansprüche

1. Verfahren zum Darstellen einer Umgebung (16) eines Fahrzeugs (10), wobei das Fahrzeug (10) ein kamerabasiertes Umgebungserfassungssystem (14) aufweist zur Erfassung der Umgebung (16) des Fahrzeugs (10), zum Bewegen des Fahrzeugs (10) zu einer Zielposition (24) in der Umgebung (16), umfassend die Schritte
Bereitstellen von Bildern der Umgebung (16) des Fahrzeugs (10) mit dem kamerabasierten Umgebungserfassungssystem (14),
Erzeugen eines Umgebungsbildes (26) in einer Vogelperspektive basierend auf den mit dem kamerabasierten Umgebungserfassungssystem (14) bereitgestellten Bildern der Umgebung (16) des Fahrzeugs (10),
Bestimmen wenigstens einer Zielposition (24) in der Umgebung (16) des Fahrzeugs (10),
Darstellen der wenigstens einen Zielposition (24) in einer ersten Überlagerungsebene, welche die Umgebung (16) des Fahrzeugs (10) abdeckt, und
Überlagern des Umgebungsbildes (26) mit der ersten Überlagerungsebene, Ermitteln eines nicht befahrbaren Bereichs in der Umgebung des Fahrzeugs (10),
Darstellen des nicht befahrbaren Bereichs (30) in einer zweiten Überlagerungsebene, welche die Umgebung (16) des Fahrzeugs (10) abdeckt, und
Überlagern des Umgebungsbildes (26) mit der zweiten Überlagerungsebene, wobei das Darstellen des nicht befahrbaren Bereichs (30) in einer zweiten Überlagerungsebene, welche die Umgebung (16) des Fahrzeugs (10) abdeckt, ein Erzeugen einer Darstellung des nicht befahrbaren Bereichs (30) in einer Seitenansicht basierend auf den mit dem kamerabasierten Umgebungserfassungssystem (14) bereitgestellten Bildern der Umgebung (16) des Fahrzeugs (10) umfasst,
Ermitteln wenigstens eines Hindernisses (32) in der Umgebung (16) des Fahrzeugs (10),
Darstellen des wenigstens einen Hindernisses (32) in einer dritten Überlagerungsebene, welche die Umgebung (16) des Fahrzeugs (10) abdeckt, und
Überlagern des Umgebungsbildes (26) mit der dritten Überlagerungsebene,
wobei das Darstellen des wenigstens einen Hindernisses (32) in einer dritten Überlagerungsebene, welche die Umgebung (16) des Fahrzeugs (10) abdeckt, ein Erzeugen einer Darstellung des wenigstens einen Hindernisses (32) in einer Seitenansicht basierend auf den mit dem kamerabasierten Umgebungserfassungssystem (14) bereitgestellten Bildern der Umgebung (16) des Fahrzeugs (10) und ein Bereitstellen der Seitenansicht-Darstellung des wenigstens einen Hindernisses (32) umfasst;
wobei der nicht befahrbare Bereich (30) entweder unmittelbar ermittelt wird, oder wobei zunächst ein befahrbarer Bereich (28) ermittelt und der nicht befahrbare Bereich (30) durch eine Invertierung des befahrbaren Bereichs (28) ermittelt wird;
wobei beim Überlagern des Umgebungsbildes (26) mit der ersten, zweiten und dritten Überlagerungsebene vorhandene Teile Des Umgebungsbildes (26)durch die Information der Überlagerungsebenen durch teilweise durchsichtige Überlagerung ersetzt oder ergänzt werden.

2. Verfahren nach einem der vorhergehenden Ansprüche, wobei
das Darstellen des wenigstens einen Hindernisses (32) in einer dritten Überlagerungsebene ein Darstellen von Begrenzungen des wenigstens einen Hindernisses (32) umfasst.

3. Verfahren nach einem der vorhergehenden Ansprüche, wobei
das Verfahren einen Schritt zum Identifizieren des wenigstens einen Hindernisses (32) umfasst, und
das Darstellen des wenigstens einen Hindernisses (32) in einer dritten Überlagerungsebene, welche die Umgebung (16) des Fahrzeugs (10) abdeckt, ein Darstellen des wenigstens einen Hindernisses (32) basierend auf der Identifizierung des wenigstens einen Hindernisses (32) umfasst.

4. Verfahren nach einem der vorhergehenden Ansprüche, wobei
das Darstellen des wenigstens einen Hindernisses (32) in einer dritten Überlagerungsebene, welche die Umgebung (16) des Fahrzeugs (10) abdeckt, eine distanzabhängige Darstellung des wenigstens einen Hindernisses (32) umfasst.

5. Verfahren nach einem der vorhergehenden Ansprüche, wobei
das Bestimmen wenigstens einer Zielposition (24) in der Umgebung (16) des Fahrzeugs (10) und/oder das Bestimmen eines nicht befahrbaren Bereichs (30) in der Umgebung (16) des Fahrzeugs (10) und/oder das Ermitteln des wenigstens einen Hindernisses (32) in der Umgebung (16) des Fahrzeugs (10) unter Berücksichtigung der mit dem kamerabasierten Umgebungserfassungssystem (14) bereitgestellten Bilder der Umgebung (16) des Fahrzeugs (10) erfolgt.

6. Verfahren nach einem der vorhergehenden Ansprüche, wobei
das Verfahren einen Schritt zum Empfangen von Sensorinformation wenigstens eines weiteren Umgebungssensors (22), insbesondere eines LiDAR-basierten Umgebungssensors, eines Radarsensors und/oder einer Mehrzahl Ultraschallsensoren, der zumindest einen Teilbereich der Umgebung (16) des Fahrzeugs (10) erfasst, umfasst, und
das Bestimmen wenigstens einer Zielposition (24) in der Umgebung (16) des Fahrzeugs (10) und/oder das Bestimmen eines nicht befahrbaren Bereichs (30) in der Umgebung (16) des Fahrzeugs (10) und/oder das Ermitteln des wenigstens einen Hindernisses (32) in der Umgebung (16) des Fahrzeugs (10) unter Berücksichtigung der Sensorinformation des wenigstens einem weiteren Umgebungssensors (22) erfolgt.

7. Verfahren nach einem der vorhergehenden Ansprüche, wobei
das Erzeugen eines Umgebungsbildes (26) in einer Vogelperspektive basierend auf den mit dem kamerabasierten Umgebungserfassungssystem (14) bereitgestellten Bildern der Umgebung (16) des Fahrzeugs (10) ein Erzeugen des Umgebungsbildes (26) nach der Art eines Bowl-View umfasst.

8. Verfahren nach einem der vorhergehenden Ansprüche, wobei
das Darstellen der wenigstens einen Zielposition (24) in einer ersten Überlagerungsebene, welche die Umgebung (16) des Fahrzeugs (10) abdeckt, ein Darstellen einer Trajektorie zum Bewegen des Fahrzeugs (10) zum Erreichen der Zielposition (24) umfasst.

9. Verfahren nach Anspruch 8, wobei
das Darstellen einer Trajektorie zum Bewegen des Fahrzeugs (10) zum Erreichen der Zielposition (24) ein Darstellen eines von dem Fahrzeug (10) beim Fahren der Trajektorie überstrichenen Bereichs umfasst.

10. Verfahren nach einem der vorhergehenden Ansprüche, wobei
das Verfahren eine Schritt zum Speichern der mit dem kamerabasierten Umgebungserfassungssystem (14) bereitgestellten Bilder der Umgebung (16) des Fahrzeugs (10) umfasst, und
das Erzeugen eines Umgebungsbildes (26) in einer Vogelperspektive ein Erzeugen wenigstens eines ersten Bereichs des Umgebungsbildes (26) basierend auf aktuell mit dem kamerabasierten Umgebungserfassungssystem (14) bereitgestellten Bildern der Umgebung (16) des Fahrzeugs (10) und wenigstens eines zweiten Bereichs mit gespeicherten Bildern der Umgebung (16) des Fahrzeugs (10) umfasst.

11. Fahrunterstützungssystem (10) zum Darstellen einer Umgebung (16) eines Fahrzeugs (10), mit einem kamerabasierten Umgebungserfassungssystem (14) zur Erfassung der Umgebung (16) des Fahrzeugs (10), und einer Verarbeitungseinheit (18), welche Bilder der Umgebung (16) des Fahrzeugs (10) empfängt, wobei das Fahrunterstützungssystem (12) ausgeführt ist, das Verfahren nach einem der vorhergehenden Ansprüche 1 bis 10 durchzuführen.

## Claims

1. Method for displaying an environment (16) of a vehicle (10), wherein the vehicle (10) has a camera-based environment detection system (14) for detecting the environment (16) of the vehicle (10), for moving the vehicle (10) to a target position (24) in the environment (16), comprising the steps Providing images of the environment (16) of the vehicle (10) with the camera-based environment detection system (14),
Generating an environment image (26) in a bird's eye view based
on the images of the environment (16) of the vehicle (10) provided by the camera-based environment detection system (14),
Determining at least one target position (24) in the environment (16) of the vehicle (10),
Displaying the at least one target position (24) in a first
overlay layer, which covers the environment (16) of the vehicle (10), and
Overlaying the environment image (26) with the first overlay layer,
Determining a non-drivable area in the environment of the vehicle (10),
Displaying the non-drivable area (30) in a second
overlay layer, which covers the environment (16) of the vehicle (10), and
Overlaying the environment image (26) with the second overlay layer,
wherein the displaying of the non-drivable area (30) in a second
overlay layer, which covers the environment (16) of the vehicle (10), includes generating a representation of the non-drivable area (30) in a
side view based on the images of the environment (16) of the
vehicle (10) provided by the camera-based environment detection system (14), Determining at least one obstacle (32) in the environment (16) of the vehicle (10),
Displaying the at least one obstacle (32) in a third
overlay layer, which covers the environment (16) of the vehicle (10), and Overlaying the environment image (26) with the third overlay layer,
wherein the displaying of the at least one obstacle (32) in a third overlay layer, which covers the environment (16) of the vehicle (10), includes generating a representation of the at least one obstacle (32) in a side view based on the images of the environment (16) of the
vehicle (10) provided by the camera-based environment detection system (14) and providing the side view representation of the at least
one obstacle (32);
wherein the non-drivable area (30) is either determined directly,
or wherein first a drivable area (28) is determined and the non-drivable area (30) is determined by inverting the drivable area (28);
wherein when overlaying the environment image (26) with the first, second and third overlay layers, existing parts of the environment image (26) are replaced or supplemented by the information of the overlay layers through partially transparent
overlay.

2. Method according to one of the preceding claims, wherein -
the displaying of the at least one obstacle (32) in a third
overlay layer includes displaying boundaries of the at least one obstacle (32).

3. Method according to one of the preceding claims, wherein -
the method includes a step for identifying the at least one
obstacle (32), and
the displaying of the at least one obstacle (32) in a third
overlay layer, which covers the environment (16) of the vehicle (10), includes displaying the at least one obstacle (32) based on the identification of the at least one obstacle (32).

4. Method according to one of the preceding claims, wherein -
the displaying of the at least one obstacle (32) in a third
overlay layer, which covers the environment (16) of the vehicle (10), includes a
distance-dependent representation of the at least one obstacle (32).

5. Method according to one of the preceding claims, wherein the determining of at least one target position (24) in the environment (16) of the vehicle (10) and/or the determining of a non-drivable area (30) in the environment (16) of the vehicle (10) and/or the determining of the at least one obstacle (32) in the environment (16) of the vehicle (10) is performed taking into account the images of the environment (16) of the vehicle (10) provided by the camera-based environment detection system (14).

6. Method according to one of the preceding claims, wherein the method includes a step for receiving sensor information from at least one additional environment sensor (22), in particular a LiDAR-based environment sensor, a radar sensor and/or a plurality of ultrasonic sensors, which detects at least a partial area of the environment (16) of the vehicle (10), and the determining of at least one target position (24) in the environment (16) of the vehicle (10) and/or the determining of a non-drivable area (30) in the environment (16) of the vehicle (10) and/or the determining of the at least one obstacle (32) in the environment (16) of the vehicle (10) is performed taking into account the sensor information of the at least one additional environment sensor (22).

7. Method according to one of the preceding claims, wherein the generating of an environment image (26) in a bird's eye view based on the images of the environment (16) of the vehicle (10) provided by the camera-based environment detection system (14) includes generating the environment image (26) in the manner of a bowl view.

8. Method according to one of the preceding claims, wherein the displaying of the at least one target position (24) in a first overlay layer, which covers the environment (16) of the vehicle (10), includes displaying a trajectory for moving the vehicle (10) to reach the target position (24).

9. Method according to claim 8, wherein the displaying of a trajectory for moving the vehicle (10) to reach the target position (24) includes displaying an area swept by the vehicle (10) when driving the trajectory.

10. Method according to one of the preceding claims, wherein the method includes a step for storing the images of the environment (16) of the vehicle (10) provided by the camera-based environment detection system (14), and the generating of an environment image (26) in a bird's eye view includes generating at least a first area of the environment image (26) based on images of the environment (16) of the vehicle (10) currently provided by the camera-based environment detection system (14) and at least a second area with stored images of the environment (16) of the vehicle (10).

11. Driver assistance system (10) for displaying an environment (16) of a vehicle (10), with a camera-based environment detection system (14) for detecting the environment (16) of the vehicle (10), and a processing unit (18), which receives images of the environment (16) of the vehicle (10), wherein the driver assistance system (12) is designed to perform the method according to one of the preceding claims 1 to 10.

## Revendications

1. Procédé pour représenter un environnement (16) d'un véhicule (10), le
véhicule (10) comprenant un système de détection d'environnement basé sur caméra (14) pour
détecter l'environnement (16) du véhicule (10), pour déplacer le véhicule (10) vers une position cible (24) dans l'environnement (16), comprenant les étapes de fourniture d'images de l'environnement (16) du véhicule (10) avec le système de détection d'environnement basé sur caméra (14),
génération d'une image d'environnement (26) dans une vue aérienne basée
sur les images de l'environnement (16) du véhicule (10) fournies par le système de détection
d'environnement basé sur caméra (14),
détermination d'au moins une position cible (24) dans l'environnement (16) du véhicule (10),
représentation de l'au moins une position cible (24) dans une première couche de superposition, qui couvre l'environnement (16) du véhicule (10), et superposition de l'image d'environnement (26) avec la première couche de superposition, détermination d'une zone non praticable dans l'environnement du véhicule (10),
représentation de la zone non praticable (30) dans une deuxième
couche de superposition, qui couvre l'environnement (16) du véhicule (10), et superposition de l'image d'environnement (26) avec la deuxième couche de superposition, où la représentation de la zone non praticable (30) dans une deuxième couche de superposition, qui couvre l'environnement (16) du véhicule (10), comprend la génération d'une représentation de la zone non praticable (30) dans une vue latérale basée sur les images de l'environnement (16) du
véhicule (10) fournies par le système de détection d'environnement basé sur caméra (14),
détermination d'au moins un obstacle (32) dans l'environnement (16) du véhicule (10),
représentation de l'au moins un obstacle (32) dans une troisième
couche de superposition, qui couvre l'environnement (16) du véhicule (10), et superposition de l'image d'environnement (26) avec la troisième couche de superposition, où la représentation de l'au moins un obstacle (32) dans une troisième couche de superposition, qui couvre l'environnement (16) du véhicule (10), comprend la génération d'une représentation de l'au moins un obstacle (32) dans une vue latérale basée sur les images de l'environnement (16) du
véhicule (10) fournies par le système de détection d'environnement basé sur caméra (14) et la fourniture de la représentation en vue latérale de l'au moins
un obstacle (32);
où la zone non praticable (30) est soit déterminée directement,
soit où une zone praticable (28) est d'abord déterminée et la zone non praticable (30) est déterminée par une inversion de la zone praticable (28);
où lors de la superposition de l'image d'environnement (26) avec les première, deuxième
et troisième couches de superposition, les parties existantes de l'image d'environnement (26) sont
remplacées ou complétées par l'information des couches de superposition par une superposition partiellement transparente.

2. Procédé selon l'une des revendications précédentes, dans lequel - la représentation de l'au moins un obstacle (32) dans une troisième couche de superposition comprend une représentation des limites de l'au moins un obstacle (32).

3. Procédé selon l'une des revendications précédentes, dans lequel - le procédé comprend une étape d'identification de l'au moins un
obstacle (32), et
la représentation de l'au moins un obstacle (32) dans une troisième couche de superposition, qui couvre l'environnement (16) du véhicule (10), comprend une représentation de l'au moins un obstacle (32) basée sur l'identification de l'au moins un obstacle (32).

4. Procédé selon l'une des revendications précédentes, dans lequel -
la représentation de l'au moins un obstacle (32) dans une troisième
couche de superposition, qui couvre l'environnement (16) du véhicule (10), comprend
une représentation dépendante de la distance de l'au moins un obstacle (32).

5. Procédé selon l'une des revendications précédentes, dans lequel la détermination d'au moins une position cible (24) dans l'environnement (16) du véhicule (10) et/ou la détermination d'une zone non praticable (30) dans l'environnement (16) du véhicule (10) et/ou la détermination de l'au moins un obstacle (32) dans l'environnement (16) du véhicule (10) s'effectue en tenant compte des images de l'environnement (16) du véhicule (10) fournies par le système de détection d'environnement basé sur caméra (14).

6. Procédé selon l'une des revendications précédentes, dans lequel le procédé comprend une étape de réception d'informations de capteur d'au moins un autre capteur d'environnement (22), en particulier un capteur d'environnement basé sur LiDAR, un capteur radar et/ou une pluralité de capteurs à ultrasons, qui détecte au moins une partie de l'environnement (16) du véhicule (10), et la détermination d'au moins une position cible (24) dans l'environnement (16) du véhicule (10) et/ou la détermination d'une zone non praticable (30) dans l'environnement (16) du véhicule (10) et/ou la détermination de l'au moins un obstacle (32) dans l'environnement (16) du véhicule (10) s'effectue en tenant compte des informations de capteur de l'au moins un autre capteur d'environnement (22).

7. Procédé selon l'une des revendications précédentes, dans lequel la génération d'une image d'environnement (26) dans une vue aérienne basée sur les images de l'environnement (16) du véhicule (10) fournies par le système de détection d'environnement basé sur caméra (14) comprend une génération de l'image d'environnement (26) selon le type d'une vue en bol (Bowl-View).

8. Procédé selon l'une des revendications précédentes, dans lequel la représentation de l'au moins une position cible (24) dans une première couche de superposition, qui couvre l'environnement (16) du véhicule (10), comprend une représentation d'une trajectoire pour déplacer le véhicule (10) afin d'atteindre la position cible (24).

9. Procédé selon la revendication 8, dans lequel la représentation d'une trajectoire pour déplacer le véhicule (10) afin d'atteindre la position cible (24) comprend une représentation d'une zone balayée par le véhicule (10) lors de la conduite de la trajectoire.

10. Procédé selon l'une des revendications précédentes, dans lequel le procédé comprend une étape de stockage des images de l'environnement (16) du véhicule (10) fournies par le système de détection d'environnement basé sur caméra (14), et la génération d'une image d'environnement (26) dans une vue aérienne comprend une génération d'au moins une première zone de l'image d'environnement (26) basée sur des images actuellement fournies par le système de détection d'environnement basé sur caméra (14) de l'environnement (16) du véhicule (10) et d'au moins une deuxième zone avec des images stockées de l'environnement (16) du véhicule (10).

11. Système d'assistance à la conduite (10) pour représenter un environnement (16) d'un véhicule (10), comprenant un système de détection d'environnement basé sur caméra (14) pour détecter l'environnement (16) du véhicule (10), et une unité de traitement (18), qui reçoit des images de l'environnement (16) du véhicule (10), le système d'assistance à la conduite (12) étant conçu pour exécuter le procédé selon l'une des revendications précédentes 1 à 10.
